# FASCICULE DE BREVET EUROPEEN

(11) **EP 1 090 788 B1**
(45) Date de publication et mention de la délivrance du brevet: **25.07.2007**
(21) Numéro de dépôt: 00402777.7
(22) Date de dépôt: 09.10.2000
(51) Int. Cl.: B60J 5/04, E05F 15/16

(54) **Ensemble comprenant une doublure intérieure de portière de véhicule et un mécanisme lève-vitre fixé à cette doublure**
Anordnung mit einer inneren Auskleidung einer Fahrzeugtür und einem Fensterhebermechanismus befestigt an dieser Auskleidung
Assembly comprising an inner lining of a vehicle door and a window lifter mechanism fixed to said lining

(30) Priorité: 07.10.1999 FR 9912519
(43) Date de publication de la demande: 11.04.2001
(73) Titulaire: SAI Automotive SAL GmbH, 76744 Wörth am Rhein (DE); ArvinMeritor Light Vehicle Systems-France, 45600 Sully sur Loire (FR)
(72) Inventeur: Eckhardt, Bernhard Yves M., 35579 Wetzlar (DE); Velthaus, Frank, 45600 Saint Pere-sur-Loire (FR)
(74) Mandataire: Lerner, François

(56) Documents cités:
- EP-A- 0 712 746
- WO-A-94/03341
- DE-A- 4 212 261
- US-A- 5 890 321

## Description

L'invention concerne le domaine de la construction automobile et plus particulièrement celui des portières de voiture et de leurs équipements.

Les portières des véhicules actuels comprennent typiquement un panneau extérieur de portière, souvent en tôle, et une doublure intérieure présentant en général un revêtement d'habillage en matières plastique recouvert d'une peau d'aspect (cuir, tissus).

Des éléments fonctionnels adaptés au fonctionnement de la portière sont habituellement interposés (au moins pour partie) entre le panneau extérieur et sa doublure intérieure. En particulier, ces éléments fonctionnels peuvent comprendre des moyens lève-vitre.

Dans ce domaine, il existe dans l'art antérieur des doublures intérieures de portière réalisées en matière plastique et fixées à un panneau extérieur typiquement en tôle de telle sorte qu'un espace interne creux soit défini entre la doublure et le panneau. A l'intérieur de cet espace, on trouve de façon générale un mécanisme lève-vitre permettant de monter ou descendre la vitre à l'intérieur dudit espace creux. Ces doublures ne présentent en général pas un niveau d'intégration suffisant, ce qui implique des temps de montage supplémentaires, des pièces intermédiaires supplémentaires, et donc un coût plus important et une productivité moins élevée. La mise en place des différents éléments du mécanisme lève vitre est en outre souvent compliquée, de même que leur réparation éventuelle.

L'invention a donc pour but de proposer une solution simple, fiable et peu onéreuse pour pallier ces problèmes.

Ainsi, l'invention concerne un ensemble selon la revendication 1 ou les sous-revendications 1 à 4, et un panneau selon la revendication 5 ou les sous-revendications 6 à 10.

Le document EP 0712 746 A1 décrit une portière comme décrit dans les préambules des revendications 1 et 5. Selon un aspect complémentaire de l'invention, le mécanisme lève-vitre comprendra de préférence un tambour et la cuvette présentera alors, selon un plan sensiblement parallèle à la surface dudit panneau, une section sensiblement complémentaire de celle du tambour pour que celui-ci s'emboîte dans cette cuvette tout en y étant monté tournant pour permettre de lever ou descendre la vitre.

Pour cette opération, et pour des questions de compacité et de facilité de montage du système :
- le tambour sera de préférence fixé de manière démontable au panneau porteur, à l'intérieur de la cuvette,
- le tambour sera par ailleurs relié à un moyen d'entraînement fixé au panneau porteur et disposé entre l'habillage et le panneau porteur, et
- la fixation entre le tambour et le panneau porteur sera de préférence mécaniquement plus résistante que la liaison entre le tambour et le moyen d'entraînement, de manière que l'on puisse retirer le moyen d'entraînement sans séparer le tambour du panneau porteur.

De façon a maintenir le tambour en position dans son logement et afin de simplifier son montage, le tambour sera de préférence monté élastiquement à force dans le logement et y restera maintenu par l'intermédiaire de protubérances faisant saillie de la périphérie du logement vers l'intérieur de celui-ci et coopérant avec une gorge périphérique du tambour.

Afin de garantir un mouvement fiable et sans heurt de la vitre, la cuvette du panneau porteur présentera de préférence, sur sa surface externe opposée, des canaux où pourront être montés des tubes creux au travers de chacun desquels passera un câble de commande pour la montée ou la descente de la vitre et dont une extrémité est reliée au tambour à travers des passages aménagés dans la cuvette.

Afin d'améliorer encore le déplacement vertical de la vitre et pour compenser les éventuels allongements ou rétrécissement des câbles, les tubes sont disposés entre le panneau externe et le panneau interne de la portière et présentent, à leur extrémité la plus proche du tambour, des ressorts de compression.

Selon un autre aspect de l'invention les moyens d'entraînement comprendront de préférence un moteur présentant un arbre d'entraînement traversant un orifice central du tambour et coopérant avec cet orifice pour la mise en rotation dudit tambour, et le logement du panneau porteur présentera un orifice central de centrage de l'arbre du moteur. Ainsi, les vibrations du moteur seront atténuées.

Pour des questions de facilité de montage du dispositif, il est préférable que le panneau porteur et l'habillages soient deux pièces distinctes en matière(s) plastique(s) et liées l'une à l'autre de manière à laisser entre elles un espace où est disposée une autre partie du mécanisme lève-vitre. Ainsi, l'accès à la cuvette est plus simple et la mise en place du tambour est facilitée.

L'invention et sa mise en ceuvre apparaîtront encore plus clairement à l'aide de la description qui va suivre, faite en référence aux dessins dans lesquels :
La figure 1 est une vue schématisée en perspective d'une portière de voiture.
La figure 2 est une vue en perspective du panneau porteur de l'invention et de quelques-uns des éléments du mécanisme lève-vitre.
La figure 3 est une vue en coupe de détail de la figure 2.
La figure 4 est une vue en coupe de détail similaire à celle de la figure 3 mais dans laquelle les éléments représentés sont dans un état monté sur le panneau porteur.
La figure 5 est une vue en perspective d'une face d'un panneau porteur conforme à l'invention.
La figure 6 est une vue en perspective d'une autre face du panneau de la figure 5 accompagné d'autres éléments du mécanisme lève-vitre.
La figure 7 est une vue en perspective similaire à celle de la figure 6 mais avec les éléments dans leur état monté sur le panneau porteur.

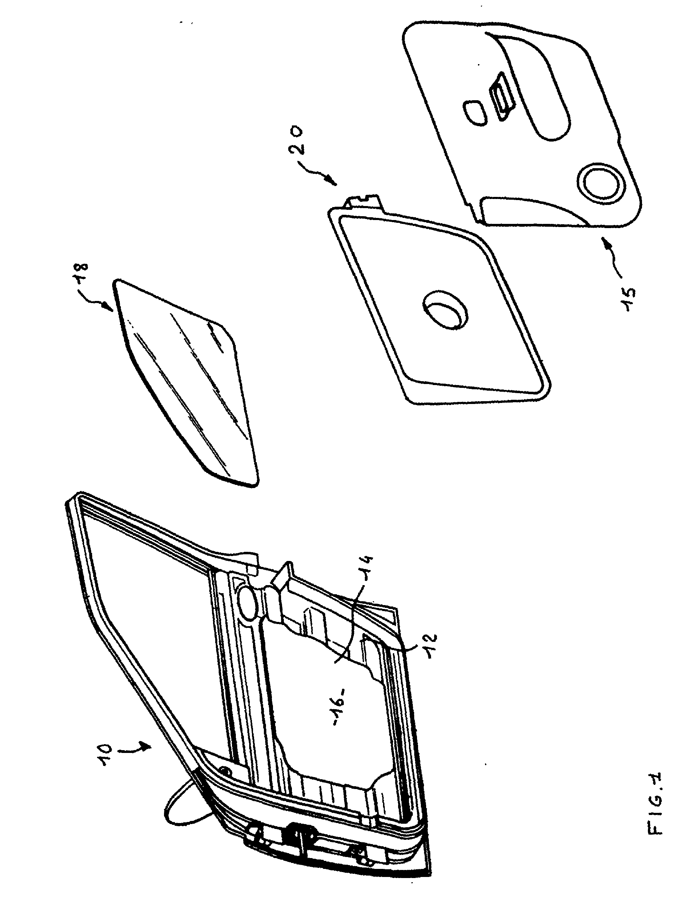

La figure 1 est une vue schématisée en perspective d'un ensemble (ou module) comprenant en particulier une portière 10 de véhicule équipée d'un panneau porteur 20 lui-même recouvert d'un habillage 15 visible de l'intérieur du véhicule et typiquement en matière plastique recouverte éventuellement par un revêtement d'aspect (cuir, tissu). La portière 10 comprend un panneau externe 12 typiquement en tôle (mais pouvant être en plastique ou en composite) doublé par un panneau interne 14 de préférence également en tôle et présentant au moins une ouverture 16. Ces deux panneaux définissent ainsi entre eux un caisson interne destiné à recevoir une vitre 18 pouvant monter ou descendre à l'aide d'un lève vitre.

Le panneau porteur 20, réalisé de préférence en matière plastique, est fixé au panneau interne 14 de la portière 10 par des moyens connus tels que des vis, des agrafes des clips ou des rivets. De la même façon, l'habillage 15 est fixé au panneau interne de la portière et/ou au panneau porteur de telle sorte qu'il puisse être amovible pour pouvoir effectuer des opérations de réparation ou de remplacement de certaines pièces, en particulier du mécanisme lève vitre.

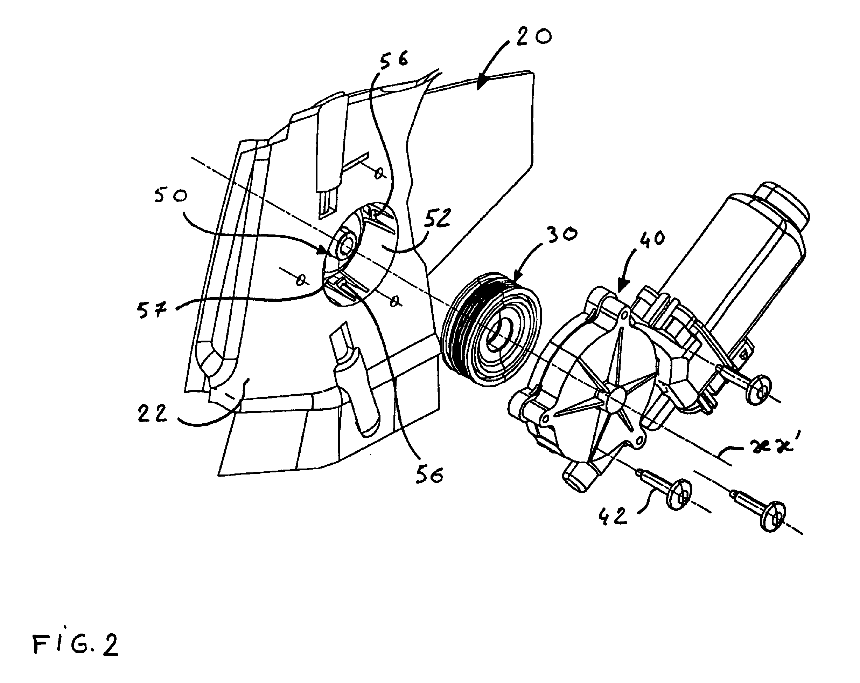

La figure 2 montre une vue en perspective de certains éléments de l'invention et notamment le panneau porteur 20 (en particulier sa surface interne 22), un tambour 30 à section circulaire et un moteur 40, ces deux derniers éléments faisant partie du mécanisme lève-vitre.

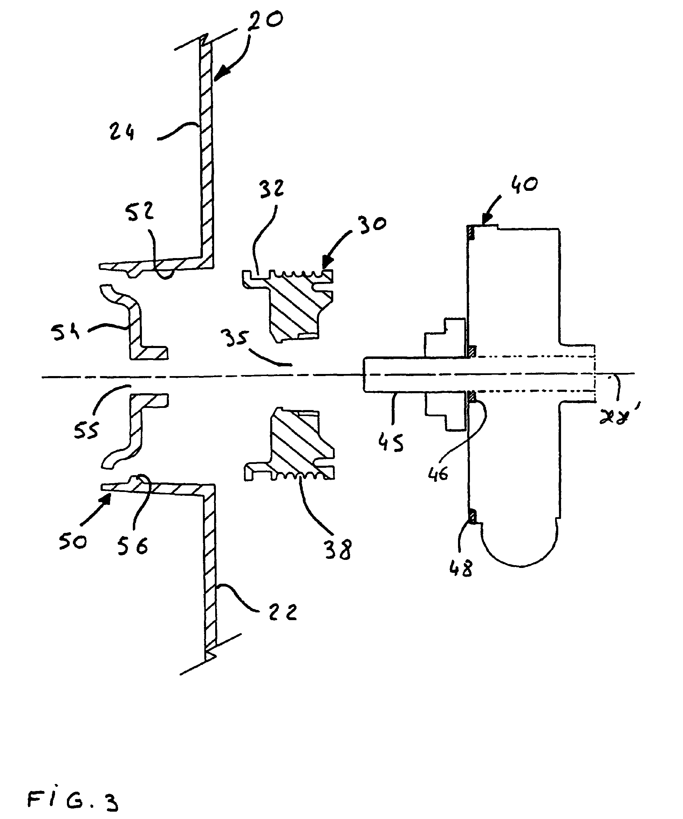

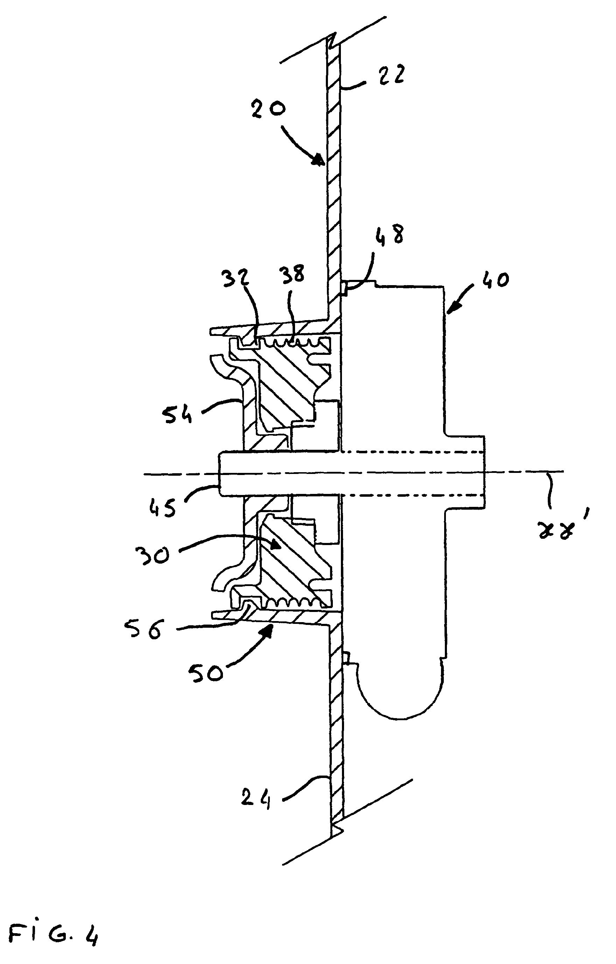

Comme on peut le voir, le panneau porteur 20 présente localement dans son épaisseur un logement creux 50 en forme de cuvette ayant une section sensiblement circulaire selon un plan parallèle au panneau. Cette cuvette 50 présente ainsi une paroi périphérique 52 sensiblement conique faisant saillie en direction de la portière (de sa tôle externe 12 en particulier) et se terminant par un fond 54 faisant face à la portière 10 (voir également figures 3 et 4). Elle est découpée sur une zone ouverte 53 représentant sensiblement un tiers de ladite paroi.

La section circulaire de la cuvette 50 est sensiblement complémentaire de celle du tambour 30 (de préférence avec un diamètre légèrement supérieur), de telle sorte que le tambour 30 peut prendre place dans cette cuvette (voir figure 4) en s'y emboîtant parfaitement tout en pouvant tourner à l'intérieur de ladite cuvette selon un axe xx' afin de monter ou descendre la vitre 18. De même, comme on peut le voir sur la figure 4, l'épaisseur du tambour prise selon l'axe xx' est sensiblement égale, et de préférence inférieure, à la profondeur de la cuvette 50 de sorte que le tambour ne dépasse pas de la surface interne 22 du panneau 20.

Comme on peut le voir sur les figures 2 à 4, le tambour 30 présente une gorge annulaire 32 proche de l'une de ses faces. Cette gorge en « U » coopère avec des protubérances 56 faisant saillie de la paroi périphérique interne 52 de la cuvette afin de bloquer axialement le tambour une fois celui-ci monté élastiquement à force dans la cuvette 50. Plus précisément, ces protubérances 56 sont des lamelles de retenue découpées dans l'épaisseur de la paroi périphérique de la cuvette et entourées de fentes 57 de façon à leur donner une certaine élasticité. Elles sont au nombre de trois réparties sur la circonférence de la cuvette.

Le tambour 30 est mis en rotation autour de son axe xx' à l'aide d'un moyen d'entraînement 40 qui peut être manuel ou mécanique, comme cela est représenté. A cet effet, un moteur électrique 40 est fixé derrière le tambour 30, contre la surface interne 22 du panneau porteur 20, par exemple en trois points à l'aide de vis 42 (voir figure 2 par exemple). Ce moteur 40, commandé de l'intérieur de l'habitacle du véhicule (bouton poussoir sur l'accoudoir de l'habillage de la portière), présente un arbre d'entraînement 45 qui pénètre à l'intérieur d'un orifice central 35 du tambour 30, ainsi qu'à l'intérieur d'un orifice central 55 du fond 54 de la cuvette 50, afin de centrer/guider cet arbre 45 et éviter qu'il ne vibre trop en tournant. L'entraînement du tambour 30 par le moteur 40 peut par exemple se faire par engrenage ou de préférence par un système de clavettes. Des joints d'étanchéité 46 et 48 sont prévus autour de l'arbre d'entraînement et entre le moteur 40 et le panneau porteur 20, afin d'éviter toute présence d'humidité dans le moteur, celui-ci étant placé en partie « sèche » du module de porte alors que le tambour est en partie « humide » en raison du fait qu'il est totalement emboîté dans la cuvette.

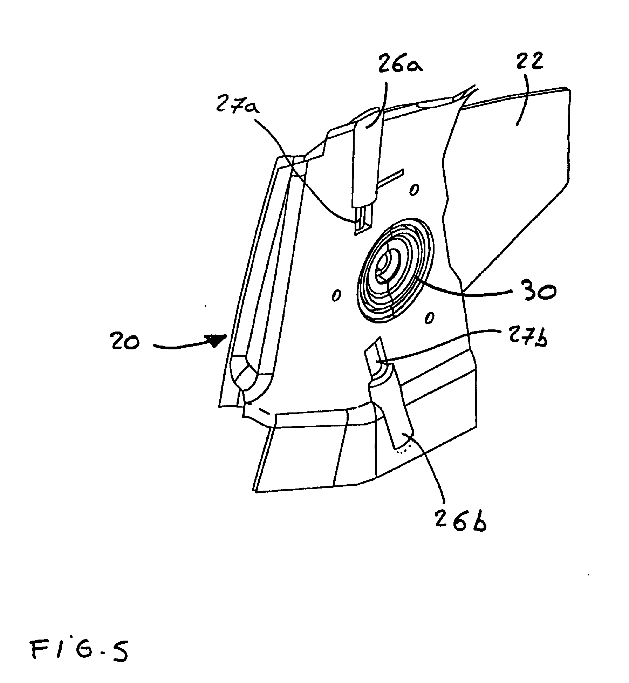

La figure 5 montre le panneau porteur 20 avec le tambour 30 intégré, avant le montage du moteur 40. On voit bien sur cette figure l'intégration parfaite du tambour ainsi que son orifice central d'entraînement. On peut noter qu'il est préférable (bien que cela ne soit pas nécessaire) qu'il ne dépasse pas de la cuvette pour permettre au moteur de le couvrir intégralement et de le protéger de l'humidité et pour pouvoir retirer ledit moteur facilement. A cet effet, il est important de préciser que l'un des avantages de l'invention est qu'il est possible de démonter le moteur sans retirer le tambour de son logement. A cet effet, la fixation entre le tambour 30 et le panneau porteur 20 (les lamelles élastiques 56 de la cuvette coopérant avec la gorge du tambour) est mécaniquement plus résistante que la liaison entre le tambour 20 et le moyen d'entraînement 40 (au niveau de l'arbre d'entraînement).

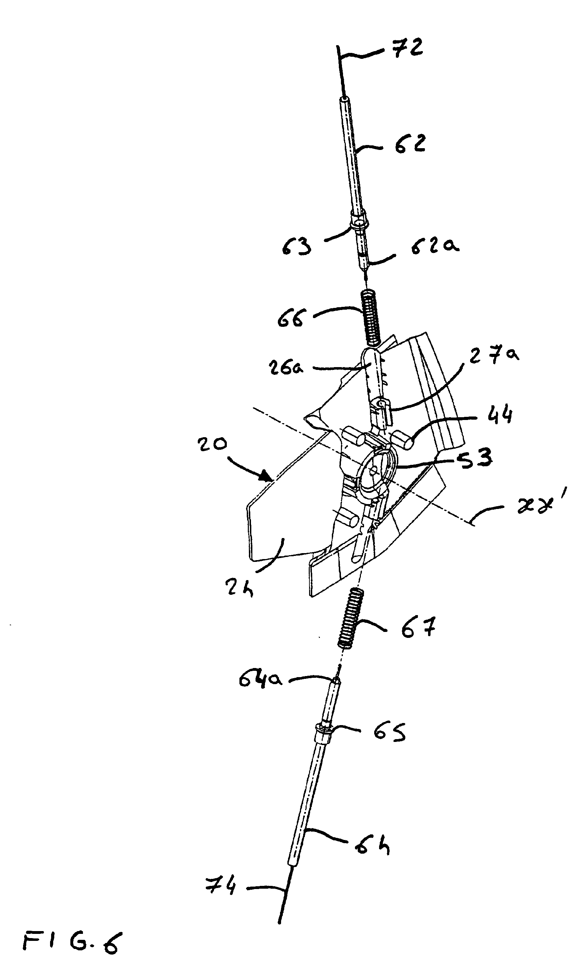

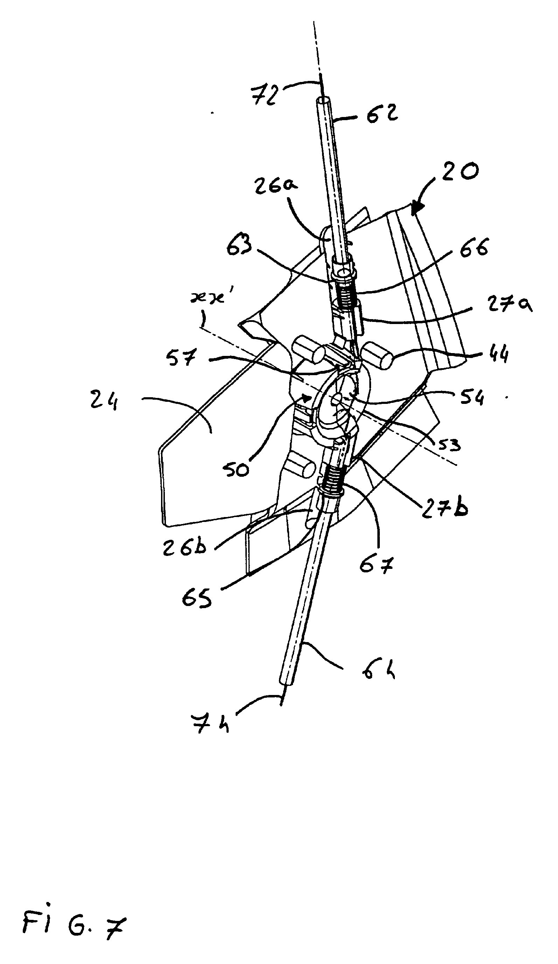

Les figures 6 à 7 représentent la surface externe 24 (ou encore « humide ») du panneau porteur, c'est-à-dire la surface qui fait face au panneau externe 12 de la portière 10. On retrouve les trois moyens de fixation du moteur matérialisé « à l'envers » par des plots 44 dépassant de la surface externe 24 du panneau porteur afin de pouvoir y réaliser un taraudage du côté de la surface interne.

On note également sur la surface externe 24 du panneau porteur la présence de canaux 26a/26b (représentés « à l'envers » sur la figure 5) de section sensiblement hémicylindrique aboutissant à la zone ouverte 53 de la cuvette. Un premier canal 26a reçoit un premier tube creux 62 sensiblement vertical dirigé vers le haut à partir de la cuvette, tandis qu'un second canal 26b reçoit un second tube creux 64 dirigé vers le bas par rapport à la cuvette. Ces tubes 62 et 64 sont montés glissant axialement dans des colliers 27a/27b (représentés « à l'envers » sur la figure 5) moulés avec le panneau porteur et disposés sensiblement entre les canaux 26a/26b et la paroi périphérique 52 de la cuvette. Ces tubes sont chacun munis, à leur extrémité 62a/64a la plus proche de la cuvette, d'un ressort 66/67 de compression prenant appui contre le collier 27a/27b d'une part et contre un épaulement 63/65 de chaque tube d'autre part.

A l'intérieur de chaque tube creux 62/64 passe un câble 72/74 métallique (ou dans un autre matériau tel que du nylon ® par exemple) dont une extrémité est fixée au tambour 30 (par exemple à l'aide d'un embout plombé serti sur le câble et inséré dans une partie du tambour) après être passée au travers de la zone ouverte 53 de la cuvette 50 (voir figure 6). L'autre extrémité de chaque câble est reliée indirectement à la vitre via un organe intermédiaire (non représenté) tel qu'un porteur glissant dans un(des) rail(s). Chaque câble 72/74 est également enroulé partiellement autour dudit tambour 30, à l'intérieur d'une rainure périphérique 38 par exemple en forme de spirale (voir figures 3 et 4), l'un dans un sens, l'autre dans le sens contraire, de telle sorte que lorsque le tambour tourne dans un sens, il enroule un câble et déroule l'autre pour monter ou descendre la vitre selon le sens de rotation. Des poulies de rappel (non représentées) peuvent être prévues pour le(s) câble(s). Comme ces câbles 72/74 peuvent se tendre ou se détendre, et donc avoir une longueur variable (quelques millimètres), les ressorts 66/67 et le montage glissant des tubes 62/674 dans les colliers 27a/27b permettent de compenser ces modifications de longueur pour que la vitre puisse toujours être montée ou descendue correctement.

Les tubes 62/64 étant disposés en partie « humide» du module, des joints d'étanchéités (non représentés) seront de préférence prévus aux deux extrémités de chaque tube, à l'intérieur de ceux-ci, pour éviter que de l'eau n'entre dans les tubes. Pour les mêmes raisons, les tubes, les câbles et les ressorts feront l'objet d'un traitement spécial de protection contre l'humidité s'ils sont en métal oxydable, par exemple une galvanisation, ou bien ils seront réalisés en acier inox. Eventuellement, les tubes creux pourront être en matière plastique par exemple extrudée.

Le tambour 30 quant à lui sera de préférence en matière plastique pour des questions de légèreté et de résistance. En particulier, un composite nylon ® (ou un polyamide) chargé de fibre de verre (à 30% par exemple) pourra être utilisé pour ses caractéristiques techniques (résistance à l'usure en particulier).

En cas de panne du dispositif, il est très facile de démonter le moteur en retirant l'habillage du panneau porteur et en dévissant les vis maintenant le moteur sur ledit panneau porteur, le tout sans retirer le tambour qui doit rester en place avec les câbles (sauf si l'on souhaite également démonter les câbles ou que l'un d'entre eux est sectionné).

L'invention n'est nullement limitée au mode de réalisation préférentiel illustré à titre d'exemple.

Ainsi, le moteur peut être remplacé par une commande manuelle telle qu'une poignée accessible de l'intérieur de l'habitacle et prolongée par un axe en prise directe avec l'orifice central du tambour.

De même, le panneau porteur et l'habillage interne peuvent être en une seule pièce en matière plastique moulée pour des questions d'intégration et de limitation du nombre d'éléments, comme l'industrie automobile a tendance à l'exiger de plus en plus.

## Revendications

1. Ensemble comprenant :
- une portière (10) de véhicule comprenant un panneau externe (12) doublé par un panneau interne (14) présentant au moins une ouverture (16),
- un panneau porteur (20) rigide recouvert d'un habillage (15) visible de l'intérieur de l'habitacle du véhicule, le panneau porteur (20) étant fixé au panneau interne (14) de la portière et s'étendant face à son ouverture (16) de façon à la recouvrir, ce panneau porteur (20) présentant localement une cuvette (50) intégrée, faisant saillie vers la portière (10), ouverte du côté de sa surface interne (22) dirigée vers l'habillage (15) et recouverte par lui,
- un mécanisme lève-vitre (30, 40, 62,64, 72, 74) reçu en partie dans la cuvette (50) et relié au panneau porteur (20) et/ou à la portière, et comprenant un tambour (30),
**caractérisé en ce que**
- la cuvette (50) présente, selon un plan sensiblement parallèle à la surface dudit panneau porteur (20), une section sensiblement complémentaire de celle du tambour (30),
- le tambour (30) a une rainure périphérique (38) en forme de spirale destinée à loger un câble,
- la cuvette a des protubérances (56) destinées à bloquer axialement le tambour (30) monté élastiquement dans la cuvette (50),
- de sorte que le tambour (30) s'emboîte dans cette cuvette (50) tout en y étant monté tournant pour permettre de lever ou descendre une vitre (18).

2. Ensemble selon la revendication 1, **caractérisé en ce que** la cuvette (50) du panneau porteur (20) présente, sur sa surface externe (24), des canaux (26a, 26b) où sont montés des tubes creux (62, 64) au travers de chacun desquels passé un câble (72, 74) de commande pour la montée ou la descente de la vitre (18) et dont une extrémité est reliée au tambour (30) à travers des passages (57) aménagés dans la cuvette (50).

3. Ensemble selon la revendication 2, **caractérisé en ce que** les tubes (62, 64) sont disposés entre le panneau externe (12) et le panneau interne (14) de la portière et présentent, à leur extrémité (62a, 64a) la plus proche du tambour, des ressorts de compression (66, 67).

4. Ensemble selon l'une quelconque des revendications précédentes, **caractérisé en ce que** la paroi périphérique (52) de la cuvette (50) est découpée sur une zone ouverte (53) de ladite paroi.

5. Panneau porteur (20) rigide pour une portière de véhicule automobile, le panneau portant étant recouvert d'un habillage (15) visible de l'intérieur de l'habitacle du véhicule, et étant adapté pour être fixé à un panneau interne (14) de la portière du véhicule, ce panneau porteur (20) présentant localement une cuvette (50) intégrée en saillie, ouverte du côté de sa surface interne (22) dirigée vers l'habillage (15) et recouverte par lui, ledit panneau porteur étant équipé d'un mécanisme lève-vitre (30, 40, 62, 64, 72 74) reçu en partie dans la cuvette (50) et adapté pour être relié à ce panneau porteur (20) et/ou à la portière, et comprenant un tambour (30),
**caractérisé en ce que**
- la cuvette (50) présente, selon un plan sensiblement parallèle à la surface dudit panneau porteur (20), une section sensiblement complémentaire de celle du tambour (30),
- le tambour (30) a une rainure périphérique (38) en forme de spirale destinée à loger un câble,
- la cuvette a des protubérances (56) destinées à bloquer axialement le tambour (30) monté élastiquement dans la cuvette (50),
- de sorte que le tambour (30) s'emboîte dans cette cuvette (50) tout en y étant monté tournant pour permettre de lever ou descendre une vitre (18).

6. Panneau porteur selon la revendication 5, **caractérisé en ce que** :
- le tambour (30) est fixé de manière démontable au panneau porteur (20), à l'intérieur de la cuvette (50),
- le tambour (30) est par ailleurs relié à un moyen d'entraînement (40) qui est fixé au panneau porteur (20) et qui est disposé entre l'habillage (15) et ledit panneau porteur (20), et
- la fixation entre le tambour (30) et le panneau porteur (20) est mécaniquement plus résistance que la liaison entre le tambour (20) et le moyen d'entraînement (40), de manière que l'on puisse retirer le moyen d'entraînement (40) sans séparer le tambour (30) du panneau porteur (20).

7. Panneau porteur selon l'une quelconque des revendications 5 ou 6, **caractérisé en ce que** le tambour (30) est monté élastiquement à force dans la cuvette (50) et y est maintenu par l'intermédiaire de protubérances (56) faisant saillie de la surface périphérique interne (52) de la cuvette (50) et coopérant avec une gorge (32) du tambour (30).

8. Panneau porteur selon l'une quelconque des revendications 5 à 7, **caractérisé en ce que** la cuvette (50) présente, sur sa surface externe (24), des canaux (26a, 26b) où sont montés des tubes creux (62, 64) au travers de chacun desquels passe un câble (72, 74) de commande pour la montée ou la descente de la vitre (18) et dont une extrémité est reliée au tambour (30) à travers des passages (57) aménagés dans la cuvette (50)

9. Panneau porteur selon l'une quelconque des revendications 6 à 8, **caractérisé en ce que** les moyens d'entraînement comprennent un moteur (40) présentant un arbre d'entraînement (45) traversant un orifice central (35) du tambour (30) et coopérant avec cet orifice pour la rotation dudit tambour, et la cuvette (50) présente un orifice central (55) de centrage de l'arbre (45) du moteur (40).

10. Panneau porteur selon l'une quelconque des revendications 5 à 9, **caractérisé en ce que** le panneau porteur (20) et l'habillage (15) sont deux pièces distinctes liées l'une à l'autre de manière à laisser entre elles un espace où est disposée une autre partie du mécanisme lève-vitre.

## Claims

1. Assembly comprising:
- a vehicle door (10) having an outer panel (12) lined with an inner panel (14) having at least one opening (16),
- a rigid support panel (20) covered with a covering (15) visible from inside the vehicle passenger compartment, the support panel (20) being fixed to the inner door panel (14) and extending opposite its opening (16) so as to cover it, the support panel (20) having locally an integrated cup (50) which projects towards the door (10) and is open on the side of its inner surface (22) oriented towards the covering (15) and covered thereby,
- a window regulator mechanism (30, 40, 62, 64, 72, 74) which is accommodated partly in the cup (50) and is connected to the support panel (20) and/or to the door, and which comprises a drum (30),
**characterised in that**
- the cup (50) has, according to a plane substantially parallel to the surface of said support panel (20), a cross-section substantially complementary to the cross-section of the drum (30),
- the drum (30) has a peripheral groove (38) in helical form for accommodating a cable,
- the cup has protruding elements (56) for the axial blocking of the drum (30), which is mounted resiliently in the cup (50),
- so that the drum (30) fits into the cup (50) while being rotatably mounted therein in order to allow a window (18) to be raised or lowered.

2. Assembly according to claim 1, **characterised in that** the cup (50) of the support panel (20) has, on its outer surface (24), channels (26a, 26b) in which there are mounted hollow tubes (62, 64) through each of which there passes a control cable (72, 74) for raising or lowering the window (18) and one end of which is connected to the drum (30) through passages (57) formed in the cup (50).

3. Assembly according to claim 2, **characterised in that** the tubes (62, 64) are arranged between the outer panel (12) and the inner panel (14) of the door and have, at their end (62a, 64a) closest to the drum, compression springs (66, 67).

4. Assembly according to any one of the preceding claims, **characterised in that** the peripheral wall (52) of the cup (50) is cut away in an open area (53) of said wall.

5. Rigid support panel (20) for a motor vehicle door, the support panel being covered with a covering (15) visible from inside the vehicle passenger compartment and being suitable for fixing to an inner panel (14) of the vehicle door, the support panel (20) having locally an integrated projecting cup (50) that is open on the side of its inner surface (22) oriented towards the covering (15) and covered thereby, said support panel being equipped with a window regulator mechanism (30, 40, 62, 64, 72, 74) which is accommodated partly in the cup (50) and is suitable for being connected to the support panel (20) and/or to the door, and which comprises a drum (30),
**characterised in that**
- the cup (50) has, according to a plane substantially parallel to the surface of said support panel (20), a cross-section substantially complementary to the cross-section of the drum (30),
- the drum (30) has a peripheral groove (38) in helical form for accommodating a cable,
- the cup has protruding elements (56) for the axial blocking of the drum (30), which is mounted resiliently in the cup (50),
- so that the drum (30) fits into the cup (50) while being rotatably mounted therein in order to allow a window (18) to be raised or lowered.

6. Support panel according to claim 5, **characterised in that**:
- the drum (30) is removably fixed to the support panel (20), inside the cup (50),
- the drum (30) is additionally connected to a drive means (40) which is fixed to the support panel (20) and which is arranged between the covering (15) and said support panel (20), and
- the fixing between the drum (30) and the support panel (20) is mechanically stronger than the connection between the drum (30) and the drive means (40), so that it is possible to withdraw the drive means (40) without separating the drum (30) from the support panel (20).

7. Support panel according to either claim 5 or claim 6, **characterised in that** the drum (30) is resiliently force-fitted in the cup (50) and is held therein by means of protruding elements (56) that project from the inner peripheral surface (52) of the cup (50) and cooperate with a channel (32) of the drum (30).

8. Support panel according to any one of claims 5 to 7, **characterised in that** the cup (50) has, on its outer surface (24), channels (26a, 26b) in which there are mounted hollow tubes (62, 64) through each of which there passes a control cable (72, 74) for raising or lowering the window (18) and one end of which is connected to the drum (30) through passages (57) formed in the cup (50).

9. Support panel according to any one of claims 6 to 8, **characterised in that** the drive means comprise a motor (40) having a drive shaft (45) which passes through a central orifice (35) of the drum (30) and cooperates with that orifice to rotate said drum, and the cup (50) has a central orifice (55) for centring the shaft (45) of the motor (40).

10. Support panel according to any one of claims 5 to 9, **characterised in that** the support panel (20) and the covering (15) are two separate elements joined together in such a manner as to leave between them a space in which another part of the window regulator mechanism is arranged.

## Patentansprüche

1. Anordnung mit:
- einer Fahrzeugtür (10) mit einer äußeren Platte (12), die mit einer inneren Platte (14) ausgekleidet ist, welche mindestens eine Öffnung (16) aufweist,
- einer steifen Trägerplatte (20), die mit einer vom Inneren des Fahrgastraumes des Fahrzeuges sichtbaren Verkleidung (15) bedeckt ist, wobei die Trägerplatte (20) auf der inneren Platte (14) der Fahrzeugtür befestigt ist und sich gegenüber ihrer Öffnung (16) derart erstreckt, daß sie bedeckt wird, wobei diese Trägerplatte (20) lokal eine integrierte Wanne (50) aufweist, welche zu der Wagentür (10) hin hervorsteht, auf der Seite ihrer inneren Oberfläche (22), welche zu der Verkleidung (15) hin gerichtet ist, offen ist und durch sie bedeckt wird,
- einem Fensterscheibenhebemechanismus (30, 40, 62, 64, 72, 74), der zum Teil in der Wanne (50) aufgenommen wird und mit der Trägerplatte (20) und/oder der Fahrzeugtür verbunden ist und eine Trommel (30) aufweist,
**dadurch gekennzeichnet, daß**
- die Wanne (50) gemäß einer zu der Oberfläche der Trägerplatte (20) im wesentlichen parallelen Ebene einen Querschnitt aufweist, der im wesentlichen dem der Trommel (30) komplementär ist,
- die Trommel (30) eine Umfangseinkerbung (38) in Spiralform hat, die dazu bestimmt ist, ein Kabel aufzunehmen,
- die Wanne Ausstülpungen (56) hat, die dazu bestimmt sind, axial die Trommel (30) zu blockieren, welche elastisch in der Wanne (50) befestigt ist,
- derart, daß sich die Trommel (30) in diese Wanne (50) einpaßt, wobei sie dort zugleich drehend befestigt ist, um zu erlauben, eine Fensterscheibe (18) anzuheben oder zu senken.

2. Anordnung nach Anspruch 1, **dadurch gekennzeichnet, daß** die Wanne (50) der Trägerplatte (20) auf ihrer äußeren Oberfläche (24) Kanäle (26a, 26b) aufweist, wo hohle Rohre (62, 64) befestigt sind, wobei durch jedes derselben ein Steuerungskabel (72, 74) für das Anheben oder das Senken der Fensterscheibe (18) hindurchgeht, und deren eines Ende mit der Trommel (30) quer durch Durchgänge (57) verbunden ist, welche in der Wanne (50) angebracht sind.

3. Anordnung nach Anspruch 2, **dadurch gekennzeichnet, daß** die Rohre (62, 64) zwischen der äußeren Platte (12) und der inneren Platte (14) der Wagentür angeordnet sind und an ihrem der Trommel nahesten Ende (62a, 64a) Druckfedern (66, 67) aufweisen.

4. Anordnung nach einem der vorhergehenden Ansprüche, **dadurch gekennzeichnet, daß** die Umfangswand (52) der Wanne (50) an einer offenen Zone (53) der Wand abgeschnitten ist.

5. Steife Trägerplatte (20) für eine Fahrzeugtür eines Kraftfahrzeuges, wobei die Trägerplatte mit einer vom Inneren des Fahrgastraumes des Fahrzeuges sichtbaren Verkleidung (15) bedeckt und geeignet ist, an einer inneren Platte (14) der Fahrzeugtür befestigt zu werden, wobei diese Trägerplatte (20) lokal eine Wanne (50) aufweist, die mit Vorsprung integriert, auf der Seite der inneren Oberfläche (22), welche zu der Verkleidung (15) hin gerichtet ist, offen und durch sie bedeckt ist, wobei die Trägerplatte mit einem Fensterscheibenhebemechanismus (30, 40, 62, 64, 72, 74) ausgestattet ist, der teilweise in der Wanne (50) aufgenommen und geeignet ist, mit der Trägerplatte (20) und/oder der Fahrzeugtür verbunden zu werden, und eine Trommel (30) aufweist,
**dadurch gekennzeichnet, daß**
- die Wanne (50) gemäß einer zu der Oberfläche der Trägerplatte (20) im wesentlichen parallelen Ebene einen Querschnitt aufweist, der im wesentlichen dem der Trommel (30) komplementär ist,
- die Trommel (30) eine Umfangseinkerbung (38) in Spiralform hat, die dazu bestimmt ist, ein Kabel aufzunehmen,
- die Wanne Ausstülpungen (56) hat, die dazu bestimmt sind, axial die elastisch in der Wanne (50) befestigte Trommel (30) zu blockieren,
- derart, daß sich die Trommel (30) in diese Wanne (50) einpaßt, wobei sie dort zugleich drehend befestigt ist, um das Heben oder das Senken einer Fensterscheibe (18) zu erlauben.

6. Trägerplatte nach Anspruch 5, **dadurch gekennzeichnet, daß**:
- die Trommel (30) abnehmbar an der Trägerplatte (20) im Inneren der Wanne (50) befestigt ist,
- die Trommel (30) außerdem mit einem Antriebsmittel (40) verbunden ist, welches an der Trägerplatte (20) befestigt und zwischen der Verkleidung (15) und der Trägerplatte (20) angeordnet ist, und
- die Befestigung zwischen der Trommel (30) und der Trägerplatte (20) mechanisch widerstandsfähiger ist als die Verbindung zwischen der Trommel (20) und dem Antriebsmittel (40), derart, daß man das Antriebsmittel (40) zurückziehen kann, ohne die Trommel (30) von der Trägerplatte (20) zu trennen.

7. Trägerplatte nach einem der Ansprüche 5 oder 6, **dadurch gekennzeichnet, daß** die Trommel (30) elastisch mit Kraft in der Wanne (50) befestigt und dort mittels Ausstülpungen (56) gehalten ist, welche von der inneren Umfangsoberfläche (52) der Wanne (50) hervorragen und mit einer Kehle (32) der Trommel (30) zusammenwirken.

8. Trägerplatte nach einem der Ansprüche 5 bis 7, **dadurch gekennzeichnet, daß** die Wanne (50) auf ihrer äußeren Oberfläche (24) Kanäle (26a, 26b) aufweist, wo hohle Rohre (62, 64) befestigt sind, wobei durch jedes derselben quer ein Steuerungskabel (72, 74) für das Anheben oder das Senken der Fensterscheibe (18) hindurchgeht und deren eines Ende mit der Trommel (30) quer durch in der Wanne (50) angeordnete Durchgänge (57) verbunden ist.

9. Trägerplatte nach einem der Ansprüche 6 bis 8, **dadurch gekennzeichnet, daß** die Antriebsmittel einen Motor (40) aufweisen, der eine Getriebewelle (45) hat, welche eine zentrale Öffnung (35) der Trommel (30) durchquert und mit dieser Öffnung für die Drehung der Trommel zusammenwirken, und die Wanne (50) eine zentrale Öffnung (55) zum Zentrieren der Welle (45) des Motors (40) aufweist.

10. Trägerplatte nach einem der Ansprüche 5 bis 9, **dadurch gekennzeichnet, daß** die Trägerplatte (20) und die Verkleidung (15) zwei verschiedene Teile sind, die derart miteinander verbunden sind, daß zwischen ihnen ein Raum freigelassen wird, wo ein anderes Teil des Fensterscheibenhebemechanismus angeordnet ist.
